# DEMANDE DE BREVET EUROPEEN

(11) **EP 0 722 196 A1**
(43) Date de publication de la demande: **17.07.1996**
(21) Numéro de dépôt: 96420014.1
(22) Date de dépôt: 12.01.1996
(51) Int. Cl.: H01Q 13/20, H01Q 1/12, H02G 3/26

(54) **Dispositif universel de soutien d'un câble rayonnant**

(30) Priorité: 13.01.1995 FR 9500544
(71) Demandeur: MALICO, F-38610 Gieres (FR)
(72) Inventeur: Libert, Jean-Claude, F-38430 Moirans (FR)
(74) Mandataire: Guerre, Dominique

(57) **Abrégé**

Ce dispositif comprend :
- un support allongé (5) dont une extrémité est conformée en socle (6) avec une semelle transversale (17) pour la fixation à une paroi (3), et dont l'autre extrémité constitue point de départ pour une glissière longitudinale (7),
- un coulisseau (8) monté coulissant dans la glissière (7),
- un berceau (10) solidaire d'un collier de serrage (12) du câble rayonnant (2) et porté par le coulisseau (8) avec possibilité de pivotement,
- et des moyens (9) de blocage du coulisseau (8) dans la glissière (7) et du berceau (10) par rapport au coulisseau (8).

## Description

La présente invention concerne un dispositif universel de soutien d'un câble rayonnant. Par "câble rayonnant", on entend tout câble métallique dénudé, susceptible d'émettre selon toute sa longueur une onde radio ou plus généralement électromagnétique, tel qu'utilisé ou mis en oeuvre dans un espace confiné, par exemple sur la paroi d'un tunnel, pour suppléer à l'absence ou la mauvaise pénétration d'ondes électromagnétiques dans ledit espace confiné.

La présente invention a pour objet un dispositif tel que précédemment défini, "universel" au sens où il peut être mise en oeuvre selon toutes sortes de configuration ou fixation, par exemple de manière suspendue verticalement ou accrochée horizontalement, et où il peut être compatible avec différents modes ou moyens de fixation. Par ailleurs, un dispositif selon l'invention permet de positionner un câble rayonnant à toutes distances appropriées par rapport à la paroi de l'ouvrage, à laquelle il est fixé.

Le dispositif selon l'invention comprend :
- un support allongé dont une extrémité est conformée en socle avec une semelle transversale pour la fixation, directe ou indirecte, à une paroi, et dont l'autre extrémité constitue point de départ pour une glissière longitudinale s'étendant jusqu'au socle et débouchant d'une face antérieure plane, perpendiculaire à la semelle,
- un coulisseau monté coulissant dans la glissière,
- un berceau solidaire d'un collier de serrage du câble rayonnant et porté par le coulisseau avec possibilité de pivotement autour d'un axe, perpendiculaire à la face antérieure plane du support,
- et des moyens de blocage du coulisseau dans la glissière et du berceau par rapport au coulisseau.

Grâce à cet agencement, le support peut être fixé verticalement à une paroi ou à un câble déjà posé, mais aussi horizontalement contre une paroi, et le berceau peut être positionné longitudinalement et angulairement par rapport au support en fonction des besoins, mais aussi pour ajuster l'horizontabilité du câble rayonnant.

Dans une forme d'exécution de l'invention, les moyens de blocage du coulisseau et du berceau comprennent une vis transversale qui, traversant, depuis l'appui de sa tête sur le berceau, le coulisseau et le support et se vissant dans une plaque-écrou venant en appui contre la face postérieure du support, constitue également axe de rotation pour le berceau.

Cette disposition permet, en desserrant ou serrant une seule vis, de faciliter, respectivement, les réglages de positionnement et le blocage de ces derniers.

Avantageusement, il comprend des moyens de calage provisoire du coulisseau par rapport au support, composés d'au moins une crémaillère fixe saillant de la face postérieure du support et d'un crantage ménagé sur la plaque écrou et saillant de la face de celle-ci faisant vis à vis à la crémaillère.

Le calage réalisé par engagement dans la crémaillère des crans de la plaque-écrou permet d'assurer un positionnement provisoire du coulisseau et du berceau par rapport au support, et si la vis est suffisamment desserrée, n'empêche pas de modifier ce positionnement, lors du réglage de niveau du câble rayonnant.

De préférence, la semelle transversale du socle est traversée par une fente centrale qui, borgne sur l'avant et débouchant sur l'arrière, débouche également dans une cavité du socle apte à recevoir la tête ou l'écrou d'un moyen de fixation.

Cet aménagement de la semelle du socle facilite l'engagement de celle-ci sur un moyen de fixation tel qu'une vis déjà mise en place dans une paroi mais non vissée à fond, et réduit le temps de pose et d'installation.

La présente invention est maintenant décrite par référence au dessin annexé dans lequel :
- la figure 1 est une vue en perspective éclatée d'un dispositif selon l'invention,
- la figure 2 est une vue en coupe longitudinale du dispositif de la figure 1, lorsqu'il est fixé à la paroi d'un ouvrage et supporte un câble rayonnant,
- la figure 3 en est une vue en coupe suivant III-III de figure 1,
- la figure 4 est une vue partielle en coupe du dispositif lorsqu'il est fixé sur un câble tendu,
- la figure 5 est une vue partielle en coupe lors de l'engagement du support sur une vis, dans une configuration horizontale.

De manière générale, le dispositif 1 selon l'invention, permettant de soutenir un câble 2 rayonnant, à partir de la paroi 3, par exemple la voûte d'un ouvrage 4, tel qu'un tunnel, est réalisé par moulage, par exemple sous pression, d'un matériau thermoplastique, et comprend un support allongé 5, un coulisseau 8, un berceau 10, et un moyen de serrage 9 coopérant avec une plaque-écrou 16.

L'une des extrémités du support allongé 5 est conformée en socle 6 ayant une semelle 17 qui est transversale et perpendiculaire à l'axe longitudinal de ce support. L'autre extrémité du support constitue point de départ pour une glissière longitudinale 7 s'étendant jusqu'au socle 6.

Dans la forme d'exécution représentée, la glissière 7 débouche de la face antérieure 5a du support et se prolonge en direction de la face postérieure 5b par une fente 7a moins large qu'elle.

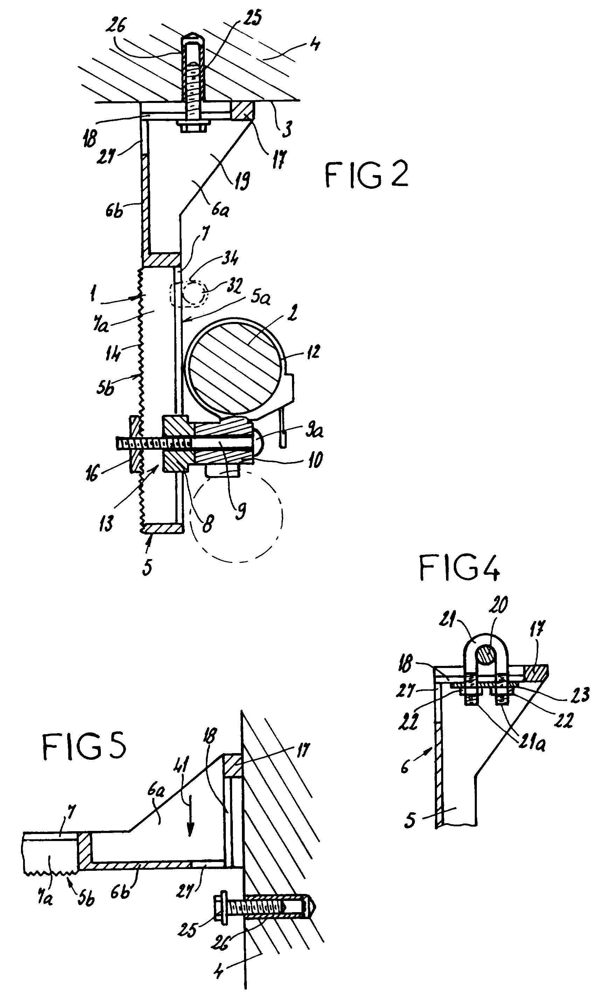

La semelle 17 du socle 6 est reliée au corps du support 5 par deux parois latérales 6a et un fond 6b délimitant une cavité 19. La semelle transversale 17 est traversée par une fente centrale 18 qui est borgne d'un côté et débouche de la face postérieure 5b de l'autre côté. Elle débouche également dans la cavité 19 ayant des dimensions suffisantes pour accueillir la tête d'une clé de serrage. Enfin, le fond 6b est découpé en 27 (figures 2, 4 et 5) pour permettre le passage de la tête d'une vis 25 ou d'un écrou 22 lors de l'engagement de la semelle sur un moyen de fixation déjà posé.

La fente centrale 18 de la semelle 17 est bordée de chaque côté par des nervures 28, espacées et parallèles, améliorant son appui sur des parois à surface inégale.

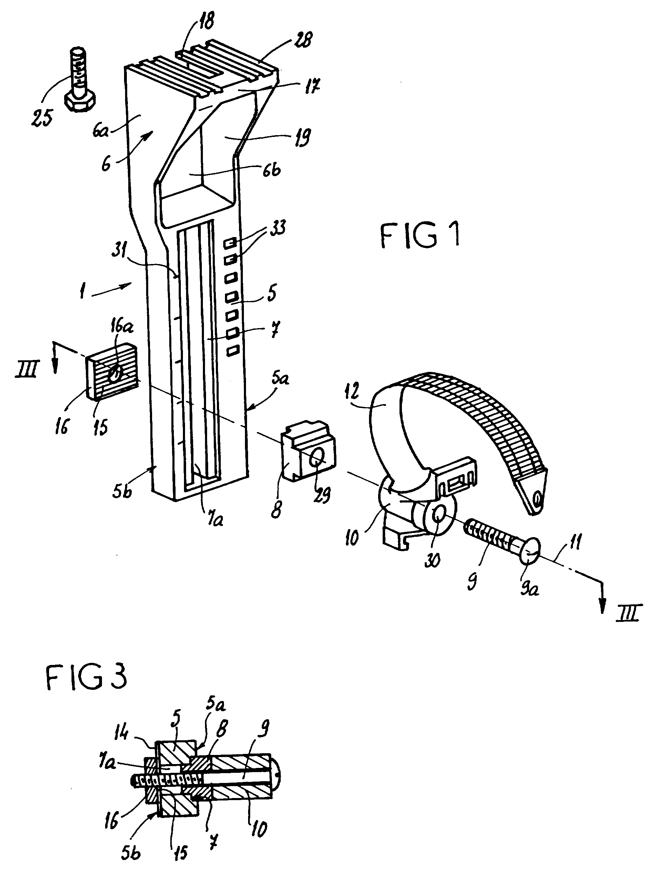

Le coulisseau 8 présente en section transversale et comme montré figure 3, une forme en T dont la partie la plus large coulisse dans la glissière 7 et dont la partie moins large est disposée dans la fente 7a. Il est traversé par un alésage 29 (figure 1).

Le berceau 10 est constitué par un corps tubulaire avec un alésage axial 30 qui, lorsque le dispositif est monté, est coaxial à celui du coulisseau 8 et est perpendiculaire à la face antérieure 5a du support. Ce corps de berceau est solidaire d'un collier 12 qui, assurant la fixation du câble rayonnant 2, est mis en place à l'état ouvert.

Les moyens de serrage 9 sont constitués par une vis 9 dont la tête 9a vient en appui sur le corps de berceau et dont la tige traverse, comme montré figure 1, le berceau 10, le coulisseau 8 et la fente 7a du support 5, avant de se visser dans un taraudage 16a de la plaque-écrou 16. Un léger desserrage de cette vis permet de régler la position longitudinale du coulisseau 8 dans la glissière 7, mais aussi la position angulaire du berceau 10 autour de son axe de pivotement 11 (figure 1). Son serrage assure le blocage en position de ces éléments.

Pour éviter le glissement du coulisseau 8 sur le support 5 dans la phase de montage et empêcher de perdre une position préréglée, le dispositif comprend également des moyens de calage provisoire.

Dans la forme d'exécution représentée, ses moyens comprennent une crémaillère fixe 14 saillant de la face postérieure 5b du support 5, de part et d'autre de la fente 70, et un crantage 15 saillant de la face de la plaque-écrou 16 faisant vis à vis à la crémaillère 14. Lorsque la vis 9 est suffisamment desserrée, ces moyens assurent le calage en position du coulisseau 8 tout en permettant, si besoin est, de modifier manuellement sa position.

Le positionnement provisoire du coulisseau peut être aidé en repérant la position de l'un de ses bords transversaux, formant alors curseur, par rapport à l'une des graduations d'une échelle graduée 31 réalisée sur la face antérieure du support 5, parallèlement et à côté de la glissière 7.

La mise en place de ce dispositif de soutien s'effectue en posant d'abord sur la paroi des chevilles 26 pour des vis 25, puis, en déplaçant le socle 6 dans le sens de la flèche 41 de figure 5 pour enfourcher la vis correspondante avec les bords de la fente 18. Après serrage de la vis, il peut être procédé à la mise en place du câble 2 dans le collier 12 qui est alors ouvert et occupe une position préréglée sur le support. Sur des parois à profil irrégulier, le monteur peut aisément modifier la position longitudinale du coulisseau, avant de bloquer la fixation au moyen de la vis.

Grâce à sa structure et à la possibilité de poser chaque dispositif en prépositionnant le coulisseau sur le support, la mise en place du câble dans chaque dispositif ne nécessite qu'un seul monteur, pour dérouler le câble, le poser dans le dispositif, régler son positionnement par rapport à la paroi, et bloquer l'ensemble, ce qui réduit le temps et le prix de revient de l'opération.

Le support peut être disposé verticalement comme montré figure 1 ou horizontalement comme montré figure 5. De plus, comme le montre en traits mixtes la figure 2, le berceau 10 peut être inversé et être associé à d'autres moyens de soutien d'un autre câble, tel qu'un câble 32 de détection d'incendie.

A cet effet, la paroi antérieure 5a du support 5 est traversée par des découpes espacées 33 pour le passage d'un collier supplémentaire 34.

Comme montré figure 4, le dispositif selon l'invention peut aussi être fixé sur un câble métallique 20 fixé à distance d'une paroi, longitudinale ou verticale. Cette fixation est assurée par un moyen complémentaire comprenant un étrier 21, dont les deux branches enfourchent le câble 20 et traversent la fente 18 du socle 6, par une plaquette 23, munie de deux trous pour le passage des extrémités filetées 21a de l'étrier et venant en appui sous la semelle 17, dans la cavité 19, et par au moins deux écrous 22, se vissant sur les extrémités 21a et plaquant la semelle 6 contre le câble 20.
Il ressort de ce qui précède que le dispositif de soutien et de fixation d'un câble rayonnant selon l'invention, permet d'assurer cette fixation, directement ou indirectement, sur toute paroi, en procurant un préréglage, adaptable en fonction du profil de la paroi, et en simplifiant les conditions de pose et réduisant le nombre de personnes affectées à cette opération.

## Revendications

1. Dispositif universel de soutien d'un câble (2) rayonnant, à partir d'une paroi (3) d'un ouvrage (4), **caractérisé en ce qu'**il comprend :
- un support allongé (5) dont une extrémité est conformée en socle (6) avec une semelle transversale (17) pour la fixation, directe ou indirecte, à une paroi (3), et dont l'autre extrémité constitue point de départ pour une glissière longitudinale (7) s'étendant jusqu'au socle (6) et débouchant d'une face antérieure (5a) plane, perpendiculaire à la semelle,
- un coulisseau (8) monté coulissant dans la glissière (7),
- un berceau (10) solidaire d'un collier de serrage (12) du câble rayonnant (2) et porté par le coulisseau (8) avec possibilité de pivotement autour d'un axe (11), perpendiculaire à la face plane (5a) du support (5),
- et des moyens (9) de blocage du coulisseau (8) dans la glissière (7) et du berceau (10) par rapport au coulisseau (8).

2. Dispositif selon la revendication 1, **caractérisé en ce que** les moyens de blocage du coulisseau (8) et du berceau (10) comprennent une vis transversale (9) qui, traversant, depuis l'appui de sa tête (9a) sur le berceau (10), le coulisseau (8) et le support (5) et se vissant dans une plaque-écrou (16) venant en appui contre la face postérieure (5b) du support (5), constitue également axe de rotation (11) pour le berceau (10).

3. Dispositif selon l'ensemble des revendications 1 et 2, **caractérisé en ce qu'**il comprend des moyens de calage provisoire du coulisseau (8) par rapport au support (5), composés d'au moins une crémaillère fixe (14) saillant de la face postérieure (5b) du support et d'un crantage (15) ménagé sur la plaque écrou (10) et saillant de la face de celle-ci faisant vis à vis à la crémaillère (14).

4. Dispositif selon la revendication 1, **caractérisé en ce que** la semelle transversale (17) du socle (6) est traversée par une fente centrale (18) qui, borgne sur l'avant et débouchant sur l'arrière, débouche également dans une cavité (19) du socle (6) apte à recevoir la tête ou l'écrou d'un moyen de fixation.

5. Dispositif selon la revendication 4, **caractérisé en ce que** la fente centrale (18) est bordée de chaque côté par des nervures espacées (28), parallèles à elle et améliorant l'appui sur une paroi.

6. Dispositif selon la revendication 4, **caractérisé en ce que** le moyen de fixation sur un câble (20), fixé à une paroi, est constitué par un étrier (21), dont les deux branches, enfourchant le câble (20), sont munies d'extrémités filetées (21a), par une plaquette (23) munie de deux trous pour le passage des branches de l'étrier et s'insérant dans la cavité (19) du socle (6), contre la semelle (17), et par au moins deux écrous (22) se vissant sur les extrémités filetées (21a) et venant en appui sur la plaquette.

7. Dispositif selon la revendication 1, **caractérisé en ce que** la face plane antérieure (5a) du support (5) est munie, à côté de la glissière (7), d'une graduation (31) de positionnement du coulisseau (8) et apte à coopérer avec l'un des bords de ce coulisseau formant curseur.
